Europäisches Patentamt

European Patent Office

Office européen des brevets

(19)

(11) **EP 0 732 387 B1**

(12) **EUROPEAN PATENT SPECIFICATION**

(45) Date of publication and mention
of the grant of the patent:
**29.01.2003 Bulletin 2003/05**

(51) Int Cl.⁷: **C09K 3/18**, A01G 9/14

(21) Application number: **96104138.1**

(22) Date of filing: **15.03.1996**

(54) **Antifogging agent composition and agricultural film coated therewith**

Beschlagverhindernde Zusammensetzung und damit beschichtete landwirtschaftliche Folie

Composition antibuée et pellicule à usage agricole revêtue de cette composition

(84) Designated Contracting States:
**DE ES FR**

(30) Priority: **17.03.1995 JP 5882995**

(43) Date of publication of application:
**18.09.1996 Bulletin 1996/38**

(73) Proprietor: **Sumitomo Chemical Company,
Limited
Chuo-ku Osaka 541-8550 (JP)**

(72) Inventors:
• **Kotani, Kozo
  Toyonaka-shi (JP)**
• **Sakaya, Taiichi
  Takatsuki-shi (JP)**
• **Nakanishi, Mitsuko
  Osaka-shi (JP)**

(74) Representative: **VOSSIUS & PARTNER
Siebertstrasse 4
81675 München (DE)**

(56) References cited:
**EP-A- 0 052 427**

• **PATENT ABSTRACTS OF JAPAN vol. 95, no. 002
  & JP-A-70 537447 (SUMIMOTO), 28 February
  1995,**
• **PATENT ABSTRACTS OF JAPAN vol. 62, no. 50
  & JP-A-57 147525 (MITSUBISHI), 11 September
  1982,**
• **PATENT ABSTRACTS OF JAPAN vol. 62, no. 50
  & JP-A-57 147526 (MITSUBISHI), 11 September
  1982,**
• **PATENT ABSTRACTS OF JAPAN vol. 92, no. 37
  & JP-A-60 096682 (MITSUBISHI), 30 May 1985,**
• **PATENT ABSTRACTS OF JAPAN vol. 95, no.
  0010 & JP-A-72 066518 (MITSUBISHI), 17
  October 1995,**

## Description

The present invention relates to an antifogging agent composition having improved coatability on film and to agricultural film excellent in antifog property, weather resistance and heat retaining property prepared by coating the composition on thermoplastic resin film, followed by drying.

Transparent materials which have hitherto been used for covering agricultural houses and tunnels are predominantly resin materials and glass. However, when the surface temperature of such covering transparent materials becomes below the dew point of the existing environment, dew condensation takes place to make the surface fogged. When the surface is fogged, the transparency of the material is impaired and the transmission of sunlight is decreased to slow down the growth of crop plants; in addition, the waterdrops adhered to the film will fall onto the crop plant and may cause diseases of the plant. Moreover, the falling drops will wet the clothes of workers operating in the house or tunnel and give them unpleasant feeling.

In the case of resin material, a generally used method for imparting antifog property to the surface is to use a covering film prepared from a composition obtained by preliminarily adding a surfactant to the resin, whereby antifog property is exhibited as the result of bleeding of the surfactant to the film surface. In this method, however, when the surfactant which has bled to the surface is washed away by rain or the like, the concentration of the surfactant is decreased and the antifogging effect is lowered, so that duration of the effect over two or more years cannot be expected with certainty.

Accordingly, particularly for the purpose of sustaining the antifogging effect over a long period, methods have been studied which comprise applying an antifog coating onto the covering film, and various attempts have been made along this line. For example, it is known to form on the film an antifog coating which comprises as the main component polymers of hydroxyethyl methacrylate or poly(vinyl alcohol).

However, the antifog coatings hitherto tried to be applied onto the film have disadvantages in that the coatings are very susceptible to scratching and are poor in abrasion resistance, and moreover, when used outdoors are poor in weather resistance.

Generally speaking, thermoplastic resins used for film are mostly incorporated with lubricants based, for example, on aliphatic acid amides, hydrocarbons or esters, in order to decrease the mutual friction of films when processing the resin into film or after processing. It is known that, when the added lubricant crystallizes at the film surface, it lowers the friction and improves the processability but, on the other hand, adversely affects the coatability of the film surface. Various methods have been tried to improve the coatability of the coating liquid onto the surface of thermoplastic resin film, which has a low surface energy and is hydrophobic. Such methods comprise, for example, adding a surfactant to the coating liquid to lower the surface tension of the coating liquid and thereby to improve its coatability. However, no satisfactory coatability has been obtained by such methods alone. Therefore, to improve the coatability of the coating liquid further, such pretreatments of the film as a preliminary corona discharge treatment of the film surface have been indispensable.

JP-A-7 053 747 discloses an agricultural film comprising an anti-fogging coating film formed by applying a mixture of a solution of colloidal alumina and silica with an anionic surfactant.

In recent years, furthermore, with the trend for agricultural workers to be of increasingly more advanced age, particularly for the sake of labor saving, agricultural films tend to be used over a number of years, and accordingly the performance characteristics required for agricultural films have become diversified, including not only sustained antifog property but also sustained weather resistance and dustproofing. With regard to weather resistance, in addition to the heat- and photo-degradation caused by sunlight, adverse effects of agricultural chemicals have become apparent. Thus, a serious problem has arisen in that the mere addition of such weather-proofing agents previously used as light-heat stabilizers cannot suppress the degradation of the resin, and the resin film comes to be broken during its use.

Thus, it is the object of the present invention to ameliorate the defects of the prior art techniques mentioned above.

This object has been achieved by the finding of:

an antifogging agent composition comprising 100 parts by weight of a dispersion medium, 0.1-5 parts by weight of colloidal alumina, 0.01-1 part by weight of colloidal silica, 0.001-0.1 part by weight of an anionic surfactant and 0.005-0.5 part by weight of an inorganic layer compound, the weight ratio of the colloidal alumina to the colloidal silica (colloidal alumina:colloidal silica) falling in the range of 90:10 to 60:40, the viscosity (A) of the composition at a low shear rate (1 s$^{-1}$) at 23°C being more than 0.1 Pa·s (1 poise) but less than 0.5 Pa·s (5 poise), the viscosity (B) of the composition at a high shear rate (500 s$^{-1}$) at 23°C being more than 0.001 Pa·s (0.01 poise) but less than 0.005 Pa·s (0.05 poise), and the ratio of the viscosities (A/B) falling in the range of 50 to 300;

an agricultural film, excellent in antifog property, heat retaining property and weather resistance, comprising thermoplastic resin film and the above antifogging agent composition; and

a process for antifogging an agricultural house which comprising coating the above antifogging agent composition

EP 0 732 387 B1

on an agricultural film.

The colloidal alumina used in the present invention refers to alumina particles having the characteristic that the alumina particles can be dispersed into the form of colloid in the dispersion medium described later. Since positively charged alumina particles are stabilized by the anions present in the dispersion medium, the colloidal alumina is commercially available as a dispersion solution added thereto Cl$^-$, NO$_3^-$, CH$_3$COO$^-$ and the like. Since alumina hydrates are basically crystalline, alumina hydrate colloid particles do not undergo polymerization to increase their size, but, in general, microparticles of the colloid have directional property and strongly agglomerate. Resultantly, the apparent shape of the particles, though it varies depending on the method and conditions of production, is in most cases fibrous or featherlike. The size of the colloid particles is preferably in the range of 5-200 nm. The dispersion solution of colloidal alumina sometimes shows thixotropy, that is, it exhibits a low viscosity at a high shear rate and a high viscosity at a low shear rate. The amount of the colloidal alumina to be compounded, relative to 100 parts by weight of the dispersion medium, is 0.1-5 parts by weight, preferably 0.5-4 parts by weight, more preferably 0.5-2.0 parts by weight.

The alumina referred to herein is not particularly limited and includes, in addition to aluminum oxide, aluminum hydroxide and the like. The aluminum hydroxide includes those which are called gibbsite or bayerite according to the difference of crystal structure, and boehmite represented by the formula AlO(OH). Basic aluminum chlorides represented by the formula Al$_x$(OH)$_y$Cl$_{3x-y}$, when the molar ratio Al/Cl is high, also have a tendency to form colloid, and are generally used as the material for colloidal alumina.

The colloidal silica used in the present invention refers to silica particles having the characteristic that the silica particles can be dispersed into the form of colloid in the dispersion medium described later. Since silica particles in general are negatively charged, appropriate counter-cations are frequently used for stabilization. Colloidal silica is commercially available as a dispersion solution added thereto counter-cations such as alkali metal ions, alkaline earth metal ions, primary to quaternary ammonium ions and the like. Since silica is a network former, the colloid particles thus formed are amorphous and in the form of spherical particles. The colloid used preferably has a particle diameter of 5-100 nm. The amount of colloidal silica to be compounded, relative to 100 parts by weight of the dispersion medium, is 0.01-1 part by weight, preferably 0.05-0.8 part by weight, more preferably 0.1-0.5 part by weight.

The silica referred to herein is not particularly limited and includes, besides silicon dioxide represented by the formula SiO$_2$, the whole of those which are called silicic acid anhydride or merely silicic acid.

In the present invention, the dispersion medium used in dispersing the above-mentioned alumina and silica into the form of colloid may be, besides water, methyl alcohol, isopropyl alcohol, n-butyl alcohol, isobutyl alcohol, ethylene glycol, xylene and the like and is not particularly limited so long as it is capable of forming desired colloid. However, when the antifogging agent composition containing colloidal alumina and silica of the present invention is applied to agricultural film used in fields, aqueous dispersion medium is preferably used in consideration of environmental safety.

The weight ratio of the colloidal alumina to the colloidal silica (colloidal alumina:colloidal silica) is in the range of 90:10 to 60:40, the range of 85:15 to 75:25 being preferred because better viscosity characteristics can then be obtained when other components described later are compounded therewith.

When the ratio of colloidal alumina to colloidal silica is higher than 90:10, a uniform coating may not be formed after drying, resulting in lowered antifogging effect. When the ratio of colloidal alumina to colloidal silica is lower than 60:40, the balance of electric charges in the dispersion medium may become poor and the stability of the colloidal mixture lost. Resultantly the mixture undergoes gelation and forms precipitation.

The anionic surfacant used in the present invention is not particularly limited and may be, for example, metal salts or ammonium salts of carboxylic acids having an alkyl chain of 6-24 carbon atoms, such as sodium caprylate, potassium caprylate, sodium decanoate, sodium caproate, sodium myristate, potassium oleate, tetramethylammonium stearate, sodium stearate, and potassium behenate; metal salts or ammonium salts of sulfonic acids having an alkyl chain of 6-24 carbon atoms, such as sodium octylsulfonate, sodium dodecylsulfonate, sodium dodecylbenzenesulfonate, and ammonium dodecylbenzenesulfonate; metal salts or ammonium salts of phosphoric acid esters having an alkyl chain of 6-24 carbon atoms; metal salts or ammonium salts of boric acid esters having an alkyl chain of 6-24 carbon atoms; fluorine-containing anionic surfactants, such as sodium perfluorodecanoate and sodium perfluorooctylsulfonate; and silicon-containing anionic surfactants having anionic groups in the metal salt of carboxylic acid and polydimethylsiloxane group. Particularly preferred of these are alkali metal salts of carboxylic acids having an alkyl chain of 6-10 carbon atoms.

The amount of the anionic surfactants to be compounded, relative to 100 parts by weight of the dispersion medium, is in the range of 0.001-0.1 part by weight, preferably 0.01-0.05 part by weight, to obtain good coatability of the antifogging agent composition. When the amount is less than 0.001 part by weight, a sufficient surface activating effect may not be obtained and the coatability may be poor. When the amount is more than 0.1 part by weight, bubbles may be undesirably apt to develop at the time of coating.

The inorganic layer compounds used in the antifogging agent composition of the present invention include inorganic compounds in which the unit crystal layers pile upon another to form a layer structure and preferably have particle diameters of 5 μm or less; and preferably used are those which undergo swelling and cleavage in a solvent. Compounds having particle diameters of 3 μm or less is more preferred because they give a better transparency to the coating. Specific examples of the inorganic layer compound include graphite, phosphoric acid derivative type compounds (e.g., zirconium phosphate type compounds), calcogenites [dicalcogenites of elements of group IV (Ti, Zr, Hf), group V (V, Nb, Ta) and group VI (Mo, W), which are represented by the formula $MX_2$, wherein X is a calcogen (S, Se, Te)], and clay minerals. The clay minerals referred to herein are classified into two types. One type of the minerals are composed of a two-layer structure wherein an octahedral layer having aluminum, magnesium or the like as the central atom is placed upon a tetrahedral layer of silica. The other type of the minerals are composed of a three-layer structure wherein an octahedral layer having aluminum, magnesium or the like as the central atom is sandwitched between two tetrahedral layers of silica. The former type includes the groups of kaolinite and antigorite. The latter type includes the groups of smectite, vermiculite and mica, which differ in the number of interlayer cations. Specific examples of the layer compound include kaolinite, dickite, nacrite, halloysite, antigorite, chrysotile, pyrophyllite, montmorillonite, hectorite, tetrasylylic mica, sodium teniolite, white mica, margarite, talc, vermiculite, phlogopite, xanthophyllite and chlorite. Particularly preferred among them are those of the smectite group, which are characterized by the fact that their aqueous dispersion have thixotropic viscosities.

The amount of the inorganic layer compound to be compounded, relative to 100 parts by weight of the dispersion medium, is 0.005-0.5 part by weight, preferably 0.01-0.02 part by weight.

When the amount is less than 0.005 part by weight, the viscosity characteristics effective for improving coatability may not be obtained. When it is more than 0.5 part by weight, the coating film obtained by applying the antifogging agent composition onto the film, followed by drying may undergo whitening to impair undesirably the transparency of the film bearing the coating film.

The viscosities of the antifogging agent composition in the present invention refer to values obtained by measuring the viscosities exhibited when the composition is subjected to respective, definite shear rates at a temperature of 23°C, and are represented by the viscosity (A) at a low shear rate (1 s$^{-1}$) and the viscosity (B) at a high shear rate (500 s$^{-1}$). The viscosity (A) at the low shear rate serves as an indication of with how much viscosity the coating liquid stay on the film immediately after being attached to the film. The higher value of the viscosity indicates the less degree of crawling and the easier applicability of the coating liquid. On the other hand, the viscosity (B) at the high shear rate is desirably as low as possible because then the antifogging agent composition can be stirred more easily, the resistance at the nozzle is less when the antifogging agent composition is injected through a nozzle by using a power sprayer, and thinner coating film can be easily obtained when the antifogging agent composition is applied by means of roller coating.

Accordingly, the viscosity (A) at the low shear rate is in the range defined by 0.1 Pa·s (1) < A < 0.5 Pa·s (5) (poises) and the viscosity (B) at the high shear rate is in the range defined by 0.001 Pa·s (0.01) < B < 0.005 Pa·s (0.05) (poise). When the viscosity (A) at the low shear rate is less than 0.1 Pa·s (1 poise), since the viscosity of the liquid at the time of adhering to the film is low, the liquid tends to flow down and to give uneven coating. When the viscosity (B) at the high shear rate is more than 0.005 Pa·s (0.05 poise), much load must be born in stirring operation, and the flowability through a hose and nozzle tends to be poor. The ratio of viscosities (A/B) is in the range of 50 to 300, more preferably 100 to 200.

Since colloidal alumina and colloidal silica have electric properties opposite to each other, when the two colloidal liquids of high concentration are mixed with each other, the resulting mixture sometimes undergo gelation and precipitation, resulting in very poor dispersibility thereafter.

Accordingly, in the process for preparing the antifogging agent composition of the present invention, the necessary components are preferably compounded in the following order from the viewpoint of the stability of the resulting antifogging agent composition.

First, a predetermined amount of water or an appropriate dispersion medium is prepared, and a predetermined amount of colloidal alumina, which is compounded in large amount, is added thereto and dispersed uniformly.

Then, to the liquid containing the colloidal alumina dispersed therein, are added respective predetermined amounts of colloidal silica as dispersion solution, anionic surfactant and, if necessary, organic electrolyte described later successively and while each being dispersed in the liquid. Alternatively, a mixture may be prepared beforehand by adding colloidal silica to a mixed solution containing the anionic surfactant and, if necessary, the organic electrolyte in (a) high concentration(s), and the mixture may be added to the above-mentioned liquid containing colloidal alumina dispersed therein so as to give a predetermined amount of colloidal silica. Finally, a predetermined amount of inorganic layer compound is added to the liquid obtained above and dispersed uniformly. In this instance, the inorganic layer compound may be added either in the form of fine powder as such or after preliminarily dispersed in an appropriate dispersion medium. The pH of the antifogging agent composition is preferably from 3 to 8, more preferably from 4 to 7, to attain good viscosity characteristic.

Since the antifogging agent composition of the present invention is to be coated on thermoplastic resin film as described later, the antifogging agent composition may be further diluted with a dispersion medium to obtain a liquid dispersion of the antifogging agent composition. The dispersion medium used for dilution may be, for example, the same as those described above.

The antifogging agent composition of the present invention may further contain an organic electrolyte from the view point of a more improved coatability of the composition. The organic electrolyte referred to herein is an organic compound having an ionizable group and includes, for example, sodium p-toluenesulfonate, sodium benzenesulfonate, potassium butylsulfonate, sodium phenylphosphinate and sodium diethylphosphate. Particularly preferred are benzenesulfonic acid derivatives. The amount of the organic electrolyte to be compounded, relative to 100 parts by weight of dispersion medium, is in the range of preferably 0.0001-0.01 part by weight, more preferably 0.001-0.005 part by weight from the view of effect of the organic electrolyte and an electrical balance.

The antifogging agent composition of the present invention may be incorporated with, besides the components mentioned above, if necessary, other surfactants (based on hydrocarbons or silicones or containing fluorine) than the anionic surfactants, resins and inorganic compounds, and further the following various ingredients, so long as the objects of the present invention are attained.

Examples of such ingredients include absorbing and reflecting agents for ultraviolet and visible light, fluorescent dyes and pigments having a wavelength converting function, and various chemical agents which exhibit some favorable effects by sustained release thereof.

The method for antifogging an agricultural house referred to in the present invention comprises uniformly coating the antifogging agent composition of the present invention on the parts of a thermoplastic resin film used as agricultural film which require good antifog property, followed by drying, to form a coating film on the thermoplastic resin film.

The film layer formed by coating and drying the antifogging agent composition consists of at least one layer. A conventionally used anchor-coating agent or the like may have been undercoated or laminate-coated between the above-mentioned layer and the thermoplastic resin film. On the above-mentioned layer, further, a topcoat layer, e.g. a layer of hydrophilic resin such as polysaccharide and poly(vinyl alcohol) may be provided according to necessity. The thermoplastic resin film may have been subjected to corona treatment, flame treatment, plasma treatment or the like.

Coating the antifogging agent composition of the present invention on the thermoplastic resin film may be conducted by any of such means as a hand-operated sprayer, electrically-driven sprayer or power sprayer using an engine pump so long as the means is capable of adhering the antifogging agent composition to the film. The time of coating may be either before or after spreading the film over the agricultural house. When the film is coated after having been spread over an agricultural house, the coating is preferably conducted by using a power sprayer, which has a large discharge capacity and is convenient for field operation. Examples of the power sprayers include a large-sized one which comprises an engine pump, tank, hose and others as a set and is moved mounted on a work vehicle, and a back pack type portable one, which is convenient for operating in narrow spaces. Sprayers of this kind which are ordinarily in use for spraying agricultural chemicals may be used for coating the antifogging agent composition after thoroughly cleared of agricultural chemicals by washing.

The shape of the nozzle attached to the end of the hose of power sprayer is not particularly limited. Nozzles of gun type and spray type may be used. Nozzles which have one injection port and spread the injected liquid horizontally are preferred. Though the shape of liquid injected from the nozzle can be controlled to range from the form of jet to the form of mist by regulating the degree of restriction of the tip, coating is preferably conducted by spraying in the form of mist because a wide area can be coated with a necessary minimum amount of liquid. As to the number of times of coating, coating is preferably conducted at least two times because plural times of repeated coating permit obtaining a thick coating film and uniform finishing. When the composition is coated in advance to spreading the film, although power sprayers may also be used, roller coaters and spray coaters employed in usual coating processing may also be favorably used (cf. "Coating Method" edited by Yuji Harasaki and printed by Maki Shoten, in 1979, Japan). After coating, the coated liquid is preferably dried as soon as possible by air drying or heat drying thereby to accelerate the formation of coating film of the antifogging agent composition. If waterdrops happen to adhere to the film before the composition is sufficiently dried and the coating film is formed, the antifogging agent composition would flow away together with waterdrops in some cases. When defective parts are found in the coating film after beginning of the use of the coated film, the defective parts can be easily repaired by recoating the parts.

The agricultural houses referred to herein include a relatively large-sized house comprising the ceiling of arch type or roof type, the side panel and the end panel, and a tunnel of dome type in which the ceiling and the side panel are integrated in one body. The house may be either a single house, which is built each independently or a multi-panel house, in which the ceilings of plural houses are connected horizontally. The structural materials used therefor may be iron pipers, steel, wood or the like. When the house is used particularly in areas where typhoons are frequent or strong winds are usual, houses with strong foundation are desirable to prevent item from collapsing.

In spreading the thermoplastic resin film over agricultural houses, tunnels and like facilities, when the film is of a structure of singly layer or same species-multi layers, the surface side and the back side of the film are not differentiated, but when the film is of a different species-multi layer structure, the surface side and the back side of the film must be determined beforehand. The surface side and the back side of a film with different species-multi layer structure are determined as follows. For example, the layer of the film with relatively low degree of blocking is determined as the surface side, and the film is preferably spread so that the surface side comes to the outside of the facility, because then the adhesion of dirt is less. Specifically, for example, when the film is of layers structure of (ethylene-vinyl acetate copolymer layer/low density polyethylene layer), the low density polyethylene layer, which shows relatively low degree of blocking, is preferably taken as the surface side. The film may be fixed to the structural material, such as pipes, by conventional methods. A preferably used method is to fix the film by holding it with a spring along a groove provided to the structural material.

The term "agricultural film" used in the present invention refers, among the materials generally used in agricultural houses, to those which are used for exterior covering, interior covering (e.g., curtain) and tunnels and which require good antifog property, heat retaining property, mist preventive property, weather resistance, antifouling property and the like. From the viewpoint of transparency and wide usability, generally thermoplastic resin films comprising thermoplastic resins as the main component are used. Examples of thermoplastic resins preferably used include polyolefin resins; chlorine-containing resins, such as poly(vinyl chloride), vinyl chloride-methyl methacrylate copolymer and poly(vinylidene dichloride); polyester resins, such as poly(ethylene-terephthalate) and poly(ethylene naphthalate); and fluororesins. The polyolefin resins may be homopolymers of ethylene or an $\alpha$-olefin having 3-10 carbon atoms and copolymers of ethylene with different species of monomers, mainly $\alpha$-olefins having 3-10 carbon atoms, and include, for example, polyethylene, polypropylene, ethylene-$\alpha$-olefin copolymers such as ethylene-butene copolymer, ethylene-4-methyl-1-pentene copolymers, and ethylene-hexene copolymer, ethylene-vinyl acetate copolymer, ethylene-acrylic acid copolymer, ethylene methyl methacrylate copolymer, ethylene-vinyl acetate-methyl methacrylate terpolymer, and ionomer resins. Particularly preferred of these polyolefin resins are low density polyethylene having a density of 0.935 $g/cm^3$ or less, ethylene-$\alpha$-olefin copolymer, and ethylene-vinyl acetate copolymer having a vinyl acetate content of 30% by weight or less because they can yield films which are excellent in transparency and flexibility and are inexpensive.

The thermoplastic resin film used for the agricultural film in the present invention may be incorporated with complex hydroxides.

The complex hydroxide is exemplified by the compound represented by the formula (1)

$$Li^+(Al^{3+})_2(OH)_6 \bullet (A^{n-})_{1/n} \bullet mH_2O \qquad (1)$$

wherein $A^{n-}$ is an n-valent anion, and m is a number, defined by the equation: $0 \leq m \leq 3$. This compound can be easily synthesized, for example, by the method described in JP-A-5-179052.

The n-valent anion denoted by $A^{n-}$ in the above formula (1) is not particularly limited and may be, for example, such anions as $Cl^-$, $Br^-$, $I^-$, $NO_3^-$, $ClO_4^-$, $SO_4^{2-}$, $CO_3^{2-}$, $SiO_3^{2-}$, $HPO_4^{2-}$, $HBO_4^{4-}$, $PO_4^{3-}$, $Fe(CN)_4^{3-}$, $Fe(CN)_4^{4-}$, $CH_3COO^-$, $C_6H_4(OH)COO^-$, $(COO)_2^{2-}$ terephthalate ion, p-hydroxybenzoate ion and naphthalenesulfonate ion.

Specific examples of the complex hydroxide available on the market include Mizukalac (a trade name, mfd. by Mizusawa Kagaku K.K.).

Another complex hydroxide than the compound (1) may be exemplified by hydrotalcite group compounds. The hydrotalcites are compounds represented by the formula (2)

$$M^{2+}_{1-x}Al_x(OH)_2(A^{n-})_{x/n} \bullet mH_2O \qquad (2)$$

wherein $M^{2+}$ is a divalent ion of a metal selected from the group consisting of magnesium, calcium and zinc, $A^{n-}$ is an n-valent anion, and x and m are numbers, defined by the equations: $0 < x < 0.5$, $0 \leq m \leq 2$. Specific examples include natural hydrotalcite $Mg_{0.75}Al_{0.25}(OH)_2CO_3 \bullet 4H_2O$ and synthetic hydrotalcite $Mg_{0.69}Al_{0.31}(OH)_2CO_3 \bullet 3.5H_2O$.

Specific examples of other complex hydroxides than mentioned above include those which have trade names Fujurain LS and LMA (mfd. by Fuji Kagaku Kogyo K.K.).

The amount of these complex hydroxides to be compounded, relative to 100 parts by weight of polyolefin resin, is preferably 0.03-25 parts by weight, more preferably 1-15 parts by weight. When the amount is less than 0.03 part by weight the effect of improving heat retaining property and weather resistance may be insufficient. When it is more than 25 parts by weight, the transparency and strength of film may be lowered. The average particle diameter of the complex hydroxide is preferably 5 $\mu m$ or less, more preferably 0.05-2 $\mu m$. In order to improve the dispersibility into film, the hydroxide may be surface-treated with higher aliphatic acids, alkali metal salts of higher aliphatic acids, or the like.

Various inorganic compounds may further be added to the thermoplastic resin film within limits not deleterious to the object of the present invention. Such compounds may be, for example, silicic acid compounds and aluminosilicic acid compounds. Examples of the silicic acid compounds include silicon oxide, magnesium silicate, calcium silicate, aluminum silicate and titanium silicate. Examples of the aluminosilicic acid compound include sodium aluminosilicate, potassium aluminosilicate and calcium aluminosilicate. Examples of aluminic acid compounds include alumina, sodium aluminate, potassium aluminate and calcium aluminate.

The thermoplastic resin film used for the agricultural film of the present invention may contain a hindered amine type compound as a stabilizer. Such hindered amine type compound are 2,2,6,6-tetralkyl-piperidine derivatives having a molecular weight or 250 or more and having a substituent at the 4-position. The substituent at the 4-position is, for example, a carboxylic acid residue, alkoxy group, and alkylamino group. The derivative may also be substituted with an alkyl group at the N-position. The amount of the hindered amine type compound to be compounded, relative to 100 parts by weight of polyolefin resin, is preferably 0.02 part by weight or more from the viewpoint of weather resistance improving effect and 5 parts by weight or less from the viewpoint of avoiding undesirable blooming of the compound, more preferably 0.1-2 parts by weight. These hindered amine type compounds may be used each alone or in a combination of two or more thereof.

The thermoplastic resin film used for the agricultural film of the present invention may contain an ultraviolet absorber. Such ultraviolet absorbers include those of benzophenone type, benzotriazole type, benzoate type and cyanoacrylate type. The amount of these ultraviolet absorbers to be compounded, relative to 100 parts by weight of polyolefin resin, is preferably 0.01 part by weight or more from the viewpoint of weather resistance improving effect and 5 parts by weight or less from the viewpoint of avoiding undesirable blooming, more preferably 0.05-1 part by weight. These ultraviolet absorbers may be used each alone or in a combination of two or more thereof.

The thermoplastic resin film used in the present invention may be further incorporated, if necessary and desired, with various additives other than those mentioned above within limits not deleterious to the object of the present invention. Examples of such additives are as follows.

One example is (an) antidripping agent(s).

Such antidripping agent may be either liquid or solid at room temperature. Examples of solid anti-dripping agent include nonionic surface active agents, for example, sorbitan aliphatic acid ester type surface active agents, such as sorbitan monostearate, sorbitan monopalmitate and sorbitan monobehenate; glycerol aliphatic acid ester type surfactant, such as glycerol monolaurate, glycerol monopalmitate, glycerol monostearate, diglycerol disterate and triglycerol monostearate; polyethylene glycol type surface active agent, such as polyethylene glycol monopalmitate and polyethylene glycol monostearate; adducts of alkylphenol with alkylene oxide, and organic acid esters of sorbitan-glycerol condensation products.

Examples of antidripping agents which are liquid at room temperature include glycerol aliphatic acid esters, such as glycerol monooleate, diglycerol monooleate, diglycerol sesquioleate, tetraglycerol monooleate, hexaglycerol monooleate, hexaglycerol pentaoleate, tetraglycerol trioleate, tetraglycerol monolaurate and hexaglycerol monolaurate; and sorbitan aliphatic acid esters, such as sorbitan monooleate, sorbitan dioleate and sorbitan trioleate. These liquid anti-dripping agents have an advantage in that they can avoid a phenomenon in which the transparency of film is impaired shortly after film production owing to bleed out of the anti-dripping agent to the film surface during film storage.

The content of the solid or liquid antidripping agent, relative to 100 parts by weight of resin, is preferably 0.01-10 parts by weight, more preferably 0.1-3 parts by weight.

Further, mist preventive agents may be incorporated into the thermoplastic resin film to impart mist preventive property to the film. Examples of such mist preventive agent include fluorine compounds having a perfluoroalkyl group, ω-hydrofluoroalkyl group or the like (particularly fluorine-containing surfactants) and silicone-type compounds having an alkylsiloxane group (particularly silicone-type surfactants). Specific examples of the fluorine-containing surfactants are those which have the trade names Unidyne DS-403, DS-406 and DS-401 (all manufactured by Daikin Kogyo K.K.).

Examples of heat stabilizers which may be added to the film include hindered phenol type compounds, such as 2,6-dialkylphenol derivative and 2-alkylphenol derivatives, sulfur-containing compounds which have a thiol or thioether linkage having a divalent sulfur atom, and phosphorous acid ester compounds containing a trivalent phosphorus atom.

The thermoplastic resin film may be incorporated, according to necessity, with various conventionally used additives other than those described above, for example, various stabilizers (e.g., light stabilizers as nickel compounds, antioxidants, ultraviolet absorbers, etc.), surface active agents, antistatic agents, lubricants, pigments and flame retarders (cf. "Techniques of Separation and Analysis of Polymer Additives" and "Supplement Volume" thereof, edited by Tanaka et al. and published by Nihon Kagaku Joho K.K., 1987, Japan; "Practical handbook on Plastic and Rubber Additives", edited by Goto et al. and published by Kagaku Kogyo K.K., 1970, Japan). The respective additives may be used each alone or in a combination of two or more thereof.

The methods used for processing the thermoplastic resin into film in the present invention may be any of the conventionally used processing methods and include, for example, calendering, inflation and T-die extrusion. The thermoplastic resin may be either of one kind or a blend of two or more kinds. The film structure may be either single layer structure or multi layer structure. In the case of multi layer structure, various combination of resins of respective layers can be selected according to intended object.

According to the present invention, an antifogging agent composition is coated on a thermoplastic resin film having excellent weather resistance and heat retaining property to form an antifog coating film thereon, whereby a material can be easily provided which sufficiently has the functions necessary for agricultural films used over a long period.

The antifogging agent composition of the present invention shows a low viscosity at the time of preparation and stirring operation of the coating liquid and increases its viscosity rapidly after being coated, so that it shows an excellent coatability on thermoplastic resin film. For example, since the viscosity becomes high immediately after spraying, the coated liquid shows little tendency to run and hence the liquid can be utilized efficiently without loss. When the coating liquid is applied inside the house over which the film has already been spread, the coating liquid shows low tendency to fall upon operating workers and does not cause much trouble of the soil at the feet becoming muddy and the arable soil in the house being damaged.

When the agricultural film obtained by forming antifog coating on thermoplastic resin film according to the present invention is used, for example, as the exterior covering of a house, the film, even under conditions of high humidity, does not cause troubles of the inner face of the film being clouded by water droplets and of waterdrops falling down to damage crop plants. Moreover, since the waterdrops flow down rapidly, the film dries rapidly and the humidity inside the house is kept low, and consequently the development of diseases of crops can be suppressed. Moreover, the coating film formed from the antifogging agent composition of the present invention can suppress the development of mist; resultantly the transmission of sunlight into the house is not prevented by mist, the adhesion of waterdrops to crop plants is avoided, and the development of diseases can be suppressed.

Furthermore, even when an agricultural film which exhibited satisfactory antifog property and mist preventive property by virtue of the effects of the antidripping agent and mist preventive agent added to the thermoplastic resin comes to lose its antifog property or mist preventive property as the result of consumption of the antidripping agent and mist preventive agent due to use through a high temperature period or long time use, the antifog property and mist preventive property can be again imparted to the film by coating and drying the antifogging agent composition of the present invention on the film.

According to the process of the present invention, a coating film formed from the antifogging agent composition can be formed on thermoplastic resin film to impart antifog property to an agricultural house. Since the antifog coating film thus formed comprises alumina and silica as the main components, it is quite stable chemically, and the antifog property at the initial time does not change with the lapse of time. Therefore, the coating film once formed exhibits its antifog property over a long period unless it is physically peeled off and, further, maintains excellent weather resistance.

The agricultural film of the present invention may contain such complex hydroxides as the compound (1) and hydrotalcites and, further, hindered amine type compounds, ultraviolet absorbers, etc., whereby the weather resistance is markedly improved. Particularly in cultivation under structure, which uses much and many agricultural chemicals, for example cultivation of fruit trees, such as vines and peaches, and flowers, the degradation of film can be effectively suppressed.

The thermoplastic resin film is incorporated with complex hydroxide or other inorganic compounds according to the present invention, the film is excellent in heat retaining property, showing a heat retaining index described later of 65% or more, sometimes 75% or more, because the complex hydroxide or the other inorganic compounds absorb the heat in the house and prevent its dissipation to the outside.

EXAMPLES

The present invention is described in detail below with reference to Examples, but the invention is not limited thereto. The test methods used in Examples are as follows. The results obtained in Examples are summarized in Table 1.

Viscosity measurement:

Viscosity characteristics were determined by using a Fluid Spectrometer Rfs II (a trade name, mfd. by Reometrix Corp.) under conditions of a temperature of $23°C$ and a sample liquid volume of 4 ml. The jig used was of a cup type (cup diameter 17 mm, bob diameter 16 mm, length 32 mm). The step programm was set as follows: rotation at 500 s$^{-1}$ for 60 s followed by rotation at 1 s$^{-1}$ for 60 s, and this sequence is repeated twice. From the viscosity data thus obtained, the peak value of the viscosity at 1 s$^{-1}$ was taken as A, and the peak value at 500 s$^{-1}$ was taken as B, and the ratio A/B was calculated.

Coatability test:

Against a vertically spread A4-size film was blown from the front a coating liquid by means of a hand-operated sprayer, and the state of adhesion of the liquid to the film was observed. The coatability was judged according to the following criterion.

○:	The film can be evenly coated by the liquid with no crawling.
△:	Some crawling occurs but the film can be coated by repeating the coating a number of times.
×:	The liquid is repelled and cannot adhere to the film.

Antifog property test:

A sheet of film was sticked with double-coated adhesive tape to an acrylic frame 34 cm in length and 5 cm in width, and was placed with the test surface downward and with an inclination of 15 degrees to the horizontal plane upon a constant temperature water bath placed in an environmental test room of constant temperature. The temperature conditions of (environmental test room/constant temperature water bath) in the test were 3°C/20°C in the "low temperature test" and 20°C/40°C in the "high temperature test". The state of waterdrops on the film surface was observed and the results were judged according to the following criterion.

○:	The film surface is wet uniformly.
△:	Waterdrops adhere to the film surface partly.
×:	Waterdrops adhere to the whole surface and the film is clouded in white.

Mist preventive property test:

A sheet of film was sticked with double-coated adhesive tape to an acrylic frame 50 cm in length and 60 cm in width, and was placed horizontally and with the test surface downward upon a constant temperature water bath of 40°C placed in a thermostatic chamber of 23°C. After the test surface had been thoroughly moistened, ice water was contacted to the outside of the film. Then the amount of developed mist and the time which elapsed until the disappearance of the mist were visually observed, and the results were judged according to the following criterion.

○:	The amount of developed mist is small and the mist disappears soon.
△:	The amount of developed mist is fairly large, and it takes time until the disappearance of mist.
×:	The amount of developed mist is very large, and it takes time until the disappearance of mist.

Heat retaining property test:

The transmittance of film in the range from 330 $cm^{-1}$ to 4400 $cm^{-1}$ was determined by using an infrared spectrophotometer (1640 Type FTIR, mfd. by Perkin-Elmer Corp.). The proportion (%) of absorption due to the film (100 μm thick) in the black body radiation region at 27°C was determined from the peak area (said proportion being referred to as "heat retaining index") and was used as the measure for heat retaining property. Thus, it can be said that the larger the proportion of absorption due to the film, the better the heat retaining property of the film.

Weather resistance test:

Test pieces cut out with a JIS No. 1 dumbell cutter were immersed in a 7-fold aqueous dilution of lime sulfur (27.5% aqueous solution of calcium polysulfide, mfd. by Hokko Kagaku Kogyo K.K.) for 24 hours, then washed and dried. Then the test pieces were exposed with lapse of time in a Sunshine Weather-o-meter (a trade name, mfd. by Suga Shikenki K.K.) at a black panel temperature of 63°C. The test pieces thus exposed for a lapse of time were subjected to a tensile test, to determine the elongation percentage (%), by use of an Autograph DSS100 (a trade name, mfd. by Shimadzu Corp.), and the weather resistance test time (i.e., exposure time) (hereinafter referred to as "weather resistance half time") at which the elongation percentage became half of the elongation percentage of the original test piece was determined. The larger value of the time indicates the more excellent weather resistance.

Elongation percentage (%) = [(Distance (mm) between mark lines at break) - (distance (mm) between mark lines before tensile test)] ÷ [Distance (mm) between mark lines before tensile test] x 100

Example 1

Film 1: Low density polyethylene film of 30 µm thickness

Coating liquid 1: To 100 parts by weight of water were added 3 parts by weight of colloidal alumina A, 0.8 part by weight of colloidal silica A, 0.015 part by weight of sodium caprylate as an anionic surfactant, 0.002 part by weight of sodium p-toluenesulfonate as an organic electrolyte and further 0.03 part by weight of Sumecton SA as an inorganic layer compound. The resulting liquid was referred to as "coating liquid 1". The weight ratio (alumina:silica) in the liquid was 79:21.

The film 1 was cut to the A4 size, and the coating liquid 1 was sprayed upon the film by using a sprayer and then air-dried at room temperature.

Example 2

Coating liquid 2: A coating liquid was prepared in the same manner as for the coating liquid 1 except that the amount of colloidal alumina A was changed to 3.2 parts by weight and the amount of colloidal silica A to 0.56 part by weight. The liquid was referred to as "coating liquid 2". The weight ratio (alumina:silica) in the liquid was 85:15. The film 1 described in Example 1 was cut to the A4 size, and the coating liquid 2 was sprayed upon the film by using a sprayer and then air-dried at room temperature.

Example 3

Coating liquid 3: A coating liquid was prepared in the same manner as for the coating liquid 1 except that the amount of colloidal alumina A was changed to 2.7 parts by weight and the amount of colloidal silica A to 1.1 parts by weight. The liquid was referred to as "coating liquid 3". The weight ratio (Alumina:silica) in the liquid was 71:29. The film 1 described in Example 1 was cut to the A4 size, and the coating liquid 3 was sprayed upon the film by using a sprayer and then air-dried at room temperature.

Example 4

Coating liquid 4: A coating liquid was prepared in the same manner as for the coating liquid 1 except that 0.018 part by weight of sodium decanoate was used as the anionic surfactant, and the liquid was referred to as "coating liquid 4". The film 1 described in Example 1 was cut to the A4 size, and the coating liquid 4 was sprayed upon the film by using a sprayer and then air-dried at room temperature.

Example 5

Coating liquid 5: A coating liquid was prepared in the same manner as for the coating liquid 1 except that 0.002 part by weight of sodium dodecyl benzenesulfonate of an anionic surfactant ("Neopelex F25" manufactured by Kao Corp.) was used in place of sodium p-toluenesulfonate of an organic electrolyte, and the liquid was referred to as "coating liquid 5". The film 1 described in Example 1 was cut to the A4 size, and the coating liquid 5 was sprayed upon the film by using a sprayer and then air-dried at room temperature.

Example 6

Coating liquid 6: A coating liquid was prepared in the same manner as for the coating liquid 1 except that 0.03 part by weight of Kunipia F was used as the inorganic layer compound, and the liquid was referred to as "coating liquid 6". The film 1 described in Example 1 was cut to the A4 size, and the coating liquid b was sprayed upon the film by using a sprayer and then air-dried at room temperature.

Example 7

Film 2: To 100 parts by weight of an ethylene-vinyl acetate copolymer (vinyl acetate content: 15% by weight, density: 0.94 g/cm$^3$, MFR: 1.1 g/10 min) were added 8.0 parts by weight of an inorganic compound A, 0.35 part by weight of a hindered amine type compound A and 0.45 part by weight of a hindered amine type compound B respectively as a weather resistance imparting agent, 0.1 part by weight of an antioxidant I and 0.4 part by weight of a lubricant. The resulting mixture was kneaded in a Banbury mixer at 130°C for 5 minutes and then granulated with a granulater to obtain a composition in the form of pellets. This is referred to as "resin composition (1)". Then, to 100 parts by weight of an ethylene-vinyl acetate copolymer (trade name: Evatate D2011, mfd. by Sumitomo Chemical Co., Ltd.) were added 0.8 part by weight of a hindered amine type compound A, 0.1 part by weight of an ultraviolet absorber U, 0.1 part by weight of an antioxidant I and 0.4 part by weight of a lubricant, and the mixture was processed in the same manner as for the resin composition (1) to obtain pellets of a composition. The composition is referred to as "resin composition (2)".

A film 100 μm in thickness (intermediate layer 60 μm, both outer layers, each 20 μm) was prepared using the resin composition (1) as the intermediate layer and the resin composition (2) as the two outer layers by use of an inflation film forming machine. The film is referred to as "film 2". The film 2 was cut to the A4 size, and the coating liquid 1 described in Example 1 was sprayed upon the outer layer side of the film by using a sprayer and then air-dried at room temperature.

Example 8

Film 3: Film was prepared in the same manner as in Example 7 except that 8.0 parts by weight of an inorganic compound B was compounded as the inorganic compound into the resin composition (1). The film is referred to as "film 3". The film 3 was cut to the A4 size, and the coating liquid 1 described in Example 1 was sprayed upon the film by using a sprayer and then air-dried at room temperature.

Example 9

Film 4: Film was prepared in the same manner as in Example 7 except that 2.0 parts by weight of the inorganic compound A and 10 parts by weight of an inorganic compound c, respectively as the inorganic compound, were added to the resin composition (1). The film is referred to as "film 4". The film 4 was cut to the A4 size, and the coating liquid 1 described in Example 1 was sprayed upon the film and then air-dried at room temperature.

Example 10

Film 5: Film was prepared in the same manner as in Example 7 except that 16.0 parts by weight of the inorganic compound A was compounded as the inorganic compound into the resin composition (1). The film is referred to as "film 5". The film 5 was cut to the A4 size, and the coating liquid 1 described in Example 1 was sprayed upon the film and then air-dried at room temperature.

Example 11

Film 6: Film was prepared in the same manner as in Example 7 except that 0.35 part by weight of monoglycerol monostearate and 0.15 part by weight of diglycerol distearate, respectively as an antidripping agent, and 0.1 part by weight of a fluorine-containing compound (trade name: Unidyne DS-403, mfd. by Daikin Kogyo K.K.) as a mist preventive agent were compounded into the resin compositions (1) and (2). The film is referred to as "film 6". The film 6 was cut to the A4 size, and the coating liquid 1 described in Example 1 was sprayed upon the film by using a sprayer and then dried at room temperature.

Example 12

Film 7: Film was prepared in the same manner as in Example 7 except that 16.0 parts by weight of the inorganic compound B was compounded as the inorganic compound into the resin composition (1). The film is referred to as "film 7". The film was cut to the A4 size, and the coating liquid described in Example 1 was sprayed upon the film and then air-dried at room temperature.

Example 13

Film 8: Film was prepared in the same manner as in Example 12 except that, in Example 12, 0.35 part by weight of monoglycerol monostearate and 0.15 part by weight of diglycerol distearate, respectively as an antidripping agent, and 0.1 part by weight of a fluorine-containing compound (trade name Unidyne DS-403, mfd. by Daikin Kogyo K.K.) as a mist preventive agent were added to the resin composition (1) and (2). The film is referred to as "film 8". The film 8 was cut to the A4 size, and the coating liquid 1 described in Example 1 was sprayed upon the film by using a sprayer and then dried at room temperature.

Example 14

Film 9: Film was prepared in the same manner as in Example 7 except that 8.0 parts by weight of an inorganic compound D was compounded as the inorganic compound into the resin composition (1) and 1.5 parts by weight of an inorganic compound B was compounded into the resin composition (2). The film is referred to as "film 9". The film was cut to the A4 size, and the coating liquid 1 described in Example 1 was sprayed upon the films and then air-dried at room temperature.

Example 15

Film 10: Film was prepared in the same manner as in Example 7 except that 8.0 parts by weight of an inorganic compound E was compounded as the inorganic compound into the resin composition (1) and 2 parts by weight of an inorganic compound C was compounded into the resin composition (2). The film is referred to as "film 10". The film 10 was cut to the A4 size, and the coating liquid 1 described in Example 1 was sprayed upon the film and then air-dried at room temperature.

Example 16

Coating liquid 7: To 100 parts by weight of water were added 7.5 parts by weight of colloidal alumina A, 2 parts by weight of colloidal silica A, 0.038 part by weight of sodium caprylate, 0.005 part by weight of sodium p-toluenesulfonate and further, as an inorganic layer compound, 0.08 part by weight of Sumecton SA. The resulting liquid was referred to as "coating liquid 7". The weight ratio (Alumina:silica) in the liquid was 79:21. The film 1 was cut to the A4 size, and the coating liquid 7 was sprayed upon the film by using a sprayer and then air-dried at room temperature.

Example 17

Coating liquid 8: To 100 parts by weight of water were added 2.0 parts by weight of colloidal alumina A, 0.5 part by weight of colloidal silica A, 0.009 part by weight of sodium caprylate, 0.001 part by weight of sodium p-toluenesulfonate and further, as an inorganic layer compound, 0.02 part by weight of Sumecton SA. The resulting liquid was referred to as "coating liquid 8". The weight ratio (Alumina:silica) in the liquid was 79:21. The film 1 was cut to the A4 size, and the coating liquid 8 was sprayed upon the film by using a sprayer and then air-dried at room temperature.

Example 18

The film 2 was spread over a pipe frame house 4.6 m in frontage and 100 m in length, and 200 ℓ of the coating liquid 1 was coated thereon by using a power sprayer. The water pressure scale of the engine pump (mfd. by HONDA MOTOR CO., LTD.) was set at 30 kg/cm$^2$, and the nozzle used was of the type which spreads the liquid horizontally (mfd. by Ikeuchi). The coatability in the operation was very good and an antifog property and mist preventive property of the coated film after air-drying with good ventilation was also good.

Example 19

Film 11: Film was prepared in the same manner as in Example 11 except that 1.4 parts by weight of monoglycerol monostearate and 0.6 part by weight of diglycerol distearate, respectively as an antidripping agent, and 0.1 part by weight of a fluorine-containing compound (Unidyne DS-403, a trade name, mfd. by Daikin Kogyo K.K.), as a mist preventive agent, were added to the resin compositions (1) and (2). The resulting film is referred to as "film 11".
The film 11 was spread over a pipe frame house 4.6 m in frontage and 100 m in length in September in 1993. After one year, the film became depleted of the antifog property due to bleeding away of the effective anti-dripping agent. Then the coating liquid 1 was coated in the same manner as in Example 17. The coatability in the operation was good, and the antifog property of the coated film after drying was also good.

Example 20

Coating liquid 9: In the following manner was prepared 180 kg of a coating liquid 9.

(1) Water, weighing 150 kg, is placed in a vessel.
(2) Colloidal alumina A, 16.2 kg, is added to the water of (1) and stirred.
(3) Colloidal silica A, 4.3 kg, is added to the liquid of (2) and stirred.

(4) An aqueous solution containing 0.68% by weight of sodium caprylate as an anionic surfactant and 0.1% by weight of sodium p-toluenesulfonate as an organic electrolyte is prepared beforehand, and a 3.6 kg portion of the aqueous solution is added to the liquid of (3) and stirred.

(5) An aqueous dispersion, 10.8 kg, obtained by dispersing in water 1.5% by weight of Sumecton SA as an inorganic layer compound is added to the liquid of (4) and stirred. The weight ratio (alumina:silica) of the coating liquid 9 was 79:21 and the ratio of the viscosities (A($1$ s$^{-1}$)/B($500$ s$^{-1}$)) was 140 (= 0.28/0.002 (2.8/0.02)).

The coating liquid 9 prepared in the above-mentioned method shows good dispersion of the ingredients, exhibits thixotropy, shows good coatability and gives coating film excellent in transparency after coating.

Example 21

Coating liquid 10: To 100 parts by weight of water were added 9 parts by weight of colloidal alumina A, 2.4 parts by weight of colloidal silica A, 0.0136 part by weight of sodium caprylate as an anionic surfactant, 0.002 part by weight of sodium p-toluenesulfonate as an organic electrolyte and further 0.09 part by weight of Sumecton SA as an inorganic layer compound. The resulting liquid was referred to as "coating liquid 10". The weight ratio (Alumina: silica) of the coating liquid was 79:21 and the ratio of the viscosities (A($1$ s$^{-1}$)/B($500$ s$^{-1}$)) was 130 (=0.26/0.002 (2.6/0.02)).

Eleven kinds of film samples (the film 1 through the film 11) 32 cm in width and 100 m in length wound round a paper tube were prepared. The film strokes were subjected to a corona treatment onto the outside of rolled film by using a corona treating machine manufactured by Sharman Corp. so that the film surface each might attain a surface tension of $5.4 \times 10^{-4}$ N/cm (54 dyne/cm) or more at a line speed of 20 m/min. Immediately after the corona treatment, the coating liquid 10 was coated on each of the film by using a Multi-purpose coater (mfd. by Yasui Seiki K.K.) with the microgravure mode (mesh 90, synchrous rotation). The line speed was 5 m/min and the dryer temperature was 90°C.

The coatability in the above coating operation was good in all of the film samples, and neither crawling nor unevenness was observed. The film samples obtained showed a good antifog property and mist preventive property.

Comparative Example 1

Coating liquid 11: A coating liquid was prepared in the same manner as for the coating liquid 1 except that the amount of colloidal alumina A was changed to 3.6 parts by weight and that of colloidal silica A to 0.2 part by weight. The liquid was referred to as "coating liquid 11". The weight ratio (alumina:silica) in the liquid was 95:5. The film 1 described in Example 1 was cut to the A4 size, and the coating liquid 11 was sprayed upon the film by using a sprayer and then air-dried at room temperature.

Comparative Example 2

Coating liquid 12: A coating liquid was prepared in the same manner as for the coating liquid 1 except that the amount of colloidal alumina A was changed to 1.9 parts by weight and that of colloidal silica A to 1.9 parts by weight. The liquid was referred to as "coating liquid 12". The weight ratio (Alumina:silica) in the liquid was 50:50.

The film 1 described in Example 1 was cut to the A4 size, and the coating liquid 12 was sprayed upon the film by using a sprayer and then air-dried at room temperature.

Comparative Example 3

Coating liquid 13: A coating liquid was prepared in the same manner as for the coating liquid 1 except that 0.01 part by weight of a cationic surfactant (described later) was added as the surfactant. The liquid was referred to as "coating liquid 13". The film 1 described in Example 1 was cut to the A4 size, and the coating liquid 13 was sprayed upon the film by using a sprayer and then air-dried at room temperature.

Comparative Example 4

Coating liquid 14: A coating liquid was prepared in the same manner as for the coating liquid 1 except that 0.01 part by weight of a nonionic surfactant (described later) was added as the surfactant. The liquid was referred to as "coating liquid 14". The film 1 described in Example 1 was cut to the A4 size, and the coating liquid 14 was sprayed upon the film by using a sprayer and then air-dried at room temperature.

Comparative Example 5

Coating liquid 15: A coating liquid was prepared in the same manner as for the coating liquid 1 except that no inorganic layer compound was added. The liquid was referred to as "coating liquid 15". The film 1 described in Example 1 was cut to the A4 size, and the coating liquid 15 was sprayed upon the film by using a sprayer and then air-dried at room temperature.

The colloidal alumina, colloidal silica, surfactants, organic electrolytes, inorganic layer compounds, lubricants, inorganic compounds, hindered amine type compounds, ultraviolet absorbers and antioxidants used in the Examples are as follows.

Colloidal alumina A: Aluminasol 520 (a trade name, mfd. by Nissan Kagaku Kogyo K.K.), a dispersion medium: water, alumina particles: 20% by weight.
Colloidal silica A: Snowtex 20 (a trade name, mfd. by Nissan Kagaku Kogyo K.K.), a dispersion medium:water, silica particles: 20% by weight.
Organic electrolyte A: sodium p-toluenesulfonate, (reagent grade, mfd. by Nacalai tesque Ltd.)

Surfactant A: sodium caprylate (reagent grade, mfd. by Tokyo Kasei K.K.)
Surfactant B: sodium decanoate (reagent grade, mfd. by Tokyo Kasei K.K.)
Surfactant C: cationic surfactant (lauryltrimethylammonium chloride, reagent grade, mfd. by Nacalai tesque)
Surfactant D: nonionic surfactant (decaglycerol monolaurate) (SY Glyster ML750, a trade name, mfd. by Sakamoto Yakuhin Kogyo K.K.)

Inorganic layer compound A: Sumecton SA (a trade name, synthetic smectite mfd. by Kunimine Kogyo K.K.)
Inorganic compound B: Kunipia F (a trade name, mfd. by Kunimine Kogyo K.K.)
Inorganic compound A: Mizukalac (a trade name, mfd. by Mizusawa Kagaku Kogyo K.K.)
Inorganic compound B: DHT-4A (a trade name, synthetic hydrotalcite mfd. by Kyowa Kagaku Kogyo K.K.)
Inorganic compound C: Snowmark SP-3 (a trade name, mfd. by Kinsei Matic Co., Ltd.)
Inorganic compound D: Fujirain LS (a trade name, mfd. by Fuji Kagaku Kogyo K.K.)
Inorganic compound E: LMA (a trade name, mfd. by Fuji Kagaku Kogyo K.K.)
Hindered amine type compound A: Tinuvin 622-LD (a trade name, mfd. by Ciba-Geigy Corp.)
Hindered amine type compound B: Chimassorb 944-LD (a trade name, mfd. by Ciba-Geigy Corp.)
Antioxidant I: Irganox 1010 (a trade name, mfd. by Ciba-Geigy Corp.)
Ultraviolet absorber U: Sumisorb 130 (a trade name, mfd. by Sumitomo Chemical Co., Ltd.)
Lubricant: A mixture of the following three components: oleic amide/stearic amide/ethylene-bisstearic amide = 3/2/15 (weight ratio)

Table 1 (to be continued)

| | Antifogging agent composition (pt. by wt.) | | | | Viscosity |
| | Colloidal alumina: colloidal silica (solid wt. ratio) | Surfactant | Organic electrolyte | Inorganic layer compound | 1 s⁻¹/500 s⁻¹ (ratio) |
|---|---|---|---|---|---|
| Example 1 | 79:21 | A (0.015) | A (0.002) | A (0.03) | 0.24/0.002 (2.4/0.02) (120) |
| Example 2 | 85:15 | A (0.015) | A (0.002) | A (0.03) | 0.20/0.002 (2.0/0.02) (100) |
| Example 3 | 71:29 | A (0.015) | A (0.002) | A (0.03) | 0.27/0.002 (2.7/0.02) (135) |
| Example 4 | 79:21 | B (0.018) | A (0.002) | A (0.03) | 0.25/0.002 (2.5/0.02) (125) |
| Example 5 | 79:21 | A (0.017) | – | A (0.03) | 0.20/0.002 (2.0/0.02) (100) |
| Example 6 | 79:21 | A (0.015) | A (0.002) | B (0.03) | 0.28/0.002 (2.8/0.02) (140) |
| Example 7 | 79:21 | A (0.015) | A (0.002) | A (0.03) | 0.24/0.002 (2.4/0.02) (120) |
| Example 8 | 79:21 | A (0.015) | A (0.002) | A (0.03) | 0.24/0.002 (2.4/0.02) (120) |
| Example 9 | 79:21 | A (0.015) | A (0.002) | A (0.03) | 0.24/0.002 (2.4/0.02) (120) |
| Example 10 | 79:21 | A (0.015) | A (0.002) | A (0.03) | 0.24/0.002 (2.4/0.02) (120) |
| Example 11 | 79:21 | A (0.015) | A (0.002) | A (0.03) | 0.24/0.002 (2.4/0.02) (120) |
| Example 12 | 79:21 | A (0.015) | A (0.002) | A (0.03) | 0.24/0.002 (2.4/0.02) (120) |
| Example 13 | 79:21 | A (0.015) | A (0.002) | A (0.03) | 0.24/0.002 (2.4/0.02) (120) |
| Example 14 | 79:21 | A (0.015) | A (0.002) | A (0.03) | 0.24/0.002 (2.4/0.02) (120) |
| Example 15 | 79:21 | A (0.015) | A (0.002) | A (0.03) | 0.24/0.002 (2.4/0.02) (120) |

EP 0 732 387 B1

Table 1 (continued)

| | | | | | |
|---|---|---|---|---|---|
| Example 16 | 79:21 | A (0.038) | A (0.005) | A (0.08) | 0.31/0.003 (3.1/0.03) (103) |
| Example 17 | 79:21 | A (0.009) | A (0.001) | A (0.02) | 0.12/0.002 (1.2/0.02) (60) |
| Example 18 | 79/21 | A (0.015) | A (0.002) | A (0.03) | 0.24/0.002 (2.4/0.02) (120) |
| Example 19 | 79/21 | A (0.015) | A (0.002) | A (0.03) | 0.24/0.002 (2.4/0.02) (120) |
| Comp. Example 1 | 95/5 | A (0.015) | A (0.002) | A (0.03) | 0.25/0.0014 (0.25/0.014) (18) |
| Comp. Example 2 | 50/50 | A (0.015) | A (0.002) | A (0.03) | 0.061/0.0016 (0.61/0.016) (38) |
| Comp. Example 3 | 79/21 | C (0.01) | A (0.002) | A (0.03) | 0.0083/0.0011 (0.083/0.011) (8) |
| Comp. Example 4 | 79/21 | D (0.01) | A (0.002) | A (0.03) | 0.0055/0.0011 (0.055/0.011) (5) |
| Comp. Example 5 | 79/21 | A (0.015) | A (0.002) | None | 0.053/0.0014 (0.53/0.014) (38) |

EP 0 732 387 B1

Table 1 (continued)

| | Film | | Coat-ability | Anti-fog property | Mist preventive property | Heat retaining property (%) | Weather resist-ance (hr) half time |
|---|---|---|---|---|---|---|---|
| | Resin | Additive | | | | | |
| Example 1 | LDPE | | ○ | ○ | ○ | – | – |
| Example 2 | LDPE | | ○ | ○ | ○ | – | – |
| Example 3 | LDPE | | ○ | ○ | ○ | – | – |
| Example 4 | LDPE | | ○ | ○ | ○ | – | – |
| Example 5 | LDPE | | ○ | ○ | ○ | – | – |
| Example 6 | LDPE | | ○ | ○ | ○ | – | – |
| Example 7 | EVA | Inorganic compound A | ○ | ○ | ○ | 71 | 1100< |
| Example 8 | EVA | Inorganic compound B | ○ | ○ | ○ | 70 | 1100< |
| Example 9 | EVA | Inorganic compound A, C | ○ | ○ | ○ | 68 | 700 |
| Example 10 | EVA | Inorganic compound A | ○ | ○ | ○ | 80 | 1100< |
| Example 11 | EVA | Inorganic compound A, Antidripping agent | ○ | ○ | ○ | 80 | 1100< |
| Example 12 | EVA | Inorganic compound B | ○ | ○ | ○ | 80 | 1100< |
| Example 13 | EVA | Inorganic compound B, Antidripping agent | ○ | ○ | ○ | 80 | 1100< |
| Example 14 | EVA | Inorganic compound D, B | ○ | ○ | ○ | – | – |
| Example 15 | EVA | Inorganic compound E, C | ○ | ○ | ○ | – | – |

EP 0 732 387 B1

Table 1 (continued)

| | | | | | | | |
|---|---|---|---|---|---|---|---|
| Example 16 | LDPE | | ○ | ○ | ○ | − | − |
| Example 17 | LDPE | | ○ | ○ | ○ | − | − |
| Example 18 | EVA | Inorganic compound A | ○ | ○ | ○ | − | − |
| Example 19 | EVA | Inorganic compound A | ○ | ○ | ○ | − | − |
| Comp. Example 1 | LDPE | | × | × | × | − | − |
| Comp. Example 2 | LDPE | | × | × | × | − | − |
| Comp. Example 3 | LDPE | | × | × | × | − | − |
| Comp. Example 4 | LDPE | | × | × | × | − | − |
| Comp. Example 5 | LDPE | | × | × | × | − | − |

**Claims**

1. An antifogging agent composition comprising 100 parts by weight of a dispersion medium, 0.1-5 parts by weight of colloidal alumina, 0.01-1 part by weight of colloidal silica, 0.001-0.1 part by weight of an anionic surfactant and 0.005-0.5 part by weight of an inorganic layer compound, the weight ratio of the colloidal alumina to the colloidal silica (colloidal alumina:colloidal silica) falling in the range of 90:10 to 60:40, the viscosity (A) of the composition at a shear rate of $1s^{-1}$ at 23°C being more than 0.1 Pa·s (1 poise) but less than 0.5 Pa·s (5 poise), the viscosity (B) of the composition at a shear rate of $500 \text{ s}^{-1}$ at 23°C being more than 0.001 Pa·s (0.01 poise) but less than 0.005 Pa·s (0.05 poise), and the ratio of the viscosities (A/B) falling in the range of 50 to 300.

2. The antifogging agent composition according to claim 1 which further comprises 0.0001-0.01 part by weight of an organic electrolyte relative to 100 parts by weight of the dispersion medium.

3. The antifogging agent composition according to claim 1 or 2 which is obtainable by adding the colloidal silica to a liquid dispersion of colloidal alumina comprising the colloidal alumina and the dispersion medium.

4. The antifogging agent composition according to claim 3 which is obtainable by adding a liquid dispersion comprising the colloidal silica, the anionic surfactant and the dispersion medium to the liquid dispersion of colloidal alumina.

5. The antifogging agent composition according to claim 2 which is obtainable by adding a liquid dispersion comprising the colloidal silica, the anionic surfactant, the organic electrolyte and the dispersion medium to the liquid dispersion of colloidal alumina.

6. A process for imparting antifog properties to an agricultural house which comprises coating the antifogging agent composition according to any of claims 1 to 5 on an agricultural film.

7. The process for imparting antifog properties to an agricultural house according to claim 6 wherein the coating is carried out with a spray nozzle.

8. An agricultural film comprising a thermoplastic resin film and the antifogging agent composition according to any of claims 1 to 6.

9. The agricultural film according to claim 8 which is obtainable by coating said antifogging agent composition on the thermoplastic resin film, followed by drying.

10. The agricultural film according to claim 8 wherein the thermoplastic resin film is formed of a composition comprising 0.03-25 parts by weight of at least one complex hydroxide and 100 parts by weight of the thermoplastic resin.

11. The agricultural film according to claim 10 wherein the complex hydroxide is a compound represented by the formula (1).

$$\text{Li}^{+}(\text{Al}^{3+})_2(\text{OH})_6 \cdot (\text{A}^{n-})_{1/n} \cdot m\text{H}_2\text{O} \tag{1}$$

wherein $\text{A}^{n-}$ is an n-valent anion and m is a number, defined by the equation: $0 \leq m \leq 3$.

12. The agricultural film according to claim 11 wherein the thermoplastic resin film is formed of the composition which further contains 0.02-5 parts by weight of at least one hindered amine compound relative to 100 parts by weight of the thermoplastic resin.

13. The agricultural film according to claim 10 wherein the complex hydroxide is a hydrotalcite group compound.

14. The agricultural film according to claim 13 wherein the thermoplastic resin film is formed of a composition which further contains 0.02-5 parts by weight of at least one hindered amine compound relative to 100 parts by weight of the thermoplastic resin.

15. The agricultural film according to any of claims 9-14 wherein the thermoplastic resin film is formed of the composition which further contains 0.01-5 parts by weight of an ultraviolet absorber relative to 100 parts by weight of the thermoplastic resin.

16. Use of the antifogging agent composition according to any of claims 1 to 5 in an agricultural house or film.

**Patentansprüche**

1. Beschlagverhindernde Zusammensetzung umfassend 100 Gewichtsteile eines Dispergiermittels, 0,1 bis 5 Gewichtsteile kolloidales Aluminiumoxid, 0,01 bis 1 Gewichtsteil kolloidales Siliciumdioxid, 0,001 bis 0,1 Gewichtsteil eines anionischen oberflächenaktiven Mittels und 0,005 bis 0,5 Gewichtsteile einer anorganischen Schichtverbindung, wobei das Gewichtsverhältnis des kolloidalen Aluminiumoxids zum kolloidalen Siliciumdioxid (kolloidales Aluminiumoxid:kolloidalem Siliciumdioxid) im Bereich von 90:10 bis 60:40 liegt, die Viskosität (A) der Zusammensetzung bei einer Schergeschwindigkeit von 1 s$^{-1}$ bei 23°C mehr als 0,1 Pa·s (1 Poise), jedoch weniger als 0,5 Pa·s (5 Poise) beträgt, die Viskosität (B) der Zusammensetzung bei einer Schergeschwindigkeit von 500 s$^{-1}$ bei 23°C mehr als 0,001 Pa·s (0,01 Poise), jedoch weniger als 0,005 Pa·s (0,05 Poise) beträgt, und das Verhältnis der Viskositäten (A/B) im Bereich von 50 bis 300 liegt.

2. Beschlagverhindernde Zusammensetzung nach Anspruch 1, welche weiter 0,0001 bis 0,01 Gewichtsteil eines organischen Elektrolyten bezogen auf 100 Gewichtsteile des Dispergiermittels umfaßt.

3. Beschlagverhindernde Zusammensetzung nach Anspruch 1 oder 2, erhältlich durch Zugabe des kolloidalen Siliciumdioxids zu einer flüssigen Dispersion kolloidalen Aluminiumoxids, welche das kolloidale Aluminiumoxid und das Dispergiermittel umfaßt.

4. Beschlagverhindernde Zusammensetzung nach Anspruch 3, erhältlich durch Zugabe einer flüssigen Dispersion, welche das kolloidale Siliciumdioxid, das anionische oberflächenaktive Mittel und das Dispergiermittel umfaßt, zu der flüssigen Dispersion kolloidalen Aluminiumoxids.

5. Beschlagverhindernde Zusammensetzung nach Anspruch 2, erhältlich durch Zugabe einer flüssigen Dispersion, welche das kolloidale Siliciumdioxid, das anionische oberflächenaktive Mittel, den organischen Elektrolyten und das Dispergiermittel umfaßt, zu der flüssigen Dispersion kolloidalen Aluminiumoxids.

6. Verfahren zum Verleihen beschlagverhindernder Eigenschaften an ein landwirtschaftliches Gebäude, umfassend das Aufbringen der beschlagverhindernden Zusammensetzung nach einem der Ansprüche 1 bis 5 auf eine landwirtschaftliche Folie.

7. Verfahren zum Verleihen beschlagverhindernder Eigenschaften an ein landwirtschaftliches Gebäude nach Anspruch 6, wobei das Aufbringen mit einer Sprühdüse erfolgt.

8. Landwirtschaftliche Folie umfassend eine thermoplastische Harzfolie und die beschlagverhindernde Zusammensetzung nach einem der Ansprüche 1 bis 6.

9. Landwirtschaftliche Folie nach Anspruch 8, erhältlich durch Aufbringen der beschlagverhindernden Zusammensetzung auf die thermoplastische Harzfolie, gefolgt von Trocknen.

10. Landwirtschaftliche Folie nach Anspruch 8, wobei die thermoplastische Harzfolie aus einer Zusammensetzung umfassend 0,03 bis 25 Gewichtsteile mindestens eines komplexen Hydroxids und 100 Gewichtsteile des thermoplastischen Harzes gebildet ist.

11. Landwirtschaftliche Folie nach Anspruch 10, wobei das komplexe Hydroxid eine Verbindung ist, die durch die Formel (1) dargestellt ist

$$Li^+(Al^{3+})_2(OH)_6 \cdot (A^{n-})_{1/n} \cdot mH_2O \qquad (1)$$

wobei $A^{n-}$ ein n-wertiges Anion ist und m eine Zahl ist, die durch die Gleichung: $0 \leq m \leq 3$ definiert ist.

**12.** Landwirtschaftliche Folie nach Anspruch 11, wobei die thermoplastische Harzfolie aus der Zusammensetzung gebildet ist, die weiter 0,02 bis 5 Gewichtsteile mindestens einer gehinderten Aminverbindung bezogen auf 100 Gewichtsteile des thermoplastischen Harzes enthält.

**13.** Landwirtschaftliche Folie nach Anspruch 10, wobei das komplexe Hydroxid eine Verbindung aus der Hydrotalcit-Gruppe ist.

**14.** Landwirtschaftliche Folie nach Anspruch 13, wobei die thermoplastische Harzfolie aus einer Zusammensetzung gebildet ist, die weiter 0,02 bis 5 Gewichtsteile mindestens einer gehinderten Aminverbindung bezogen auf 100 Gewichtsteile des thermoplastischen Harzes enthält.

**15.** Landwirtschaftliche Folie nach einem der Ansprüche 9 bis 14, wobei die thermoplastische Harzfolie aus der Zusammensetzung gebildet ist, die weiter 0,01 bis 5 Gewichtsteile eines UV-Absorbers bezogen auf 100 Gewichtsteile des thermoplastischen Harzes enthält.

**16.** Verwendung der beschlagverhindernden Zusammensetzung nach einem der Ansprüche 1 bis 5 in einem landwirtschaftlichen Gebäude oder einer landwirtschaftlichen Folie.

**Revendications**

**1.** Composition antibuée comprenant 100 parties en poids d'un milieu de dispersion, 0,1 à 5 parties en poids d'alumine colloïdale, 0,01 à 1 partie en poids de silice colloïdale, 0,001 à 0,1 partie en poids d'un tensio-actif anionique et 0,005 à 0,5 partie en poids d'un composé de couche inorganique, le rapport pondéral de l'alumine colloïdale à la silice colloïdale (alumine colloïdale:silice colloïdale) tombant dans la gamme de 90:10 à 60:40, la viscosité (A) de la composition à une vitesse de cisaillement de 1 $s^{-1}$ à 23°C étant supérieure à 0,1 Pa.s (1 poise) mais inférieure à 0,5 Pa.s (5 poises), la viscosité (B) de la composition à une vitesse de cisaillement de 500 $s^{-1}$ à 23°C étant supérieure à plus de 0,001 Pa.s (0,01 poise) mais inférieure à 0,005 Pa.s (0,05 poise), et le rapport des viscosités (A/B) tombant dans la gamme de 50 à 300.

**2.** Composition antibuée selon la revendication 1, qui comprend de plus 0,0001 à 0,01 partie en poids d'un électrolyte organique par rapport à 100 parties en poids du milieu de dispersion.

**3.** Composition antibuée selon la revendication 1 ou 2, que l'on peut obtenir en ajoutant la silice colloïdale à une dispersion liquide d'alumine colloïdale comprenant l'alumine colloïdale et le milieu de dispersion.

**4.** Composition antibuée selon la revendication 3, que l'on peut obtenir en ajoutant une dispersion liquide comprenant la silice colloïdale, le tensio-actif anionique et le milieu de dispersion à la dispersion liquide d'alumine colloïdale.

**5.** Composition antibuée selon la revendication 2, que l'on peut obtenir en ajoutant une dispersion liquide comprenant la silice colloïdale, le tensio-actif anionique, l'électrolyt organique et le milieu de dispersion à la dispersion liquide de l'alumine colloïdale.

**6.** Procédé transmettant des propriétés antibuée à une serre agricole qui consiste à déposer la composition antibuée selon l'une quelconque des revendications 1 à 5 sur un film agricole.

**7.** Procédé pour transmettre des propriétés antibuée à une serre agricole selon la revendication 6, dans lequel le dépôt est effectué avec une tuyère de pulvérisation.

**8.** Film agricole comprenant un film de résine thermoplastique et composition antibuée selon l'une quelconque des revendications 1 à 6.

**9.** Film agricole selon la revendication 8, que l'on peut obtenir en déposant ladite composition antibuée sur le film de résine thermoplastique, suivi d'un séchage.

**10.** Film agricole selon la revendication 8, dans lequel le film de résine thermoplastique est formé d'une composition comprenant 0,03 à 25 parties en poids d'au moins un hydroxyde complexe et 100 parties en poids de la résine thermoplastique.

**11.** Film agricole selon la revendication 10, dans lequel l'hydroxyde complexe est un composé représenté par la formule (1) :

$$Li^+(Al^{3+})_2(OH)_6 \cdot (A^{n-})_{1/n} \cdot mH_2O \qquad (1)$$

dans laquelle $A^{n-}$ est un anion n-valent et m est un nombre, défini par l'équation : $0 \leq m \leq 3$.

**12.** Film agricole selon la revendication 11, dans lequel le film de résine thermoplastique est formé de la composition qui contient de plus 0,02 à 5 parties en poids d'au moins un composé amine encombré par rapport à 100 parties en poids de la résine thermoplastique.

**13.** Film agricole selon la revendication 10, dans lequel l'hydroxyde complexe est un composé du groupe hydrotalcite.

**14.** Film agricole selon la revendication 13, dans lequel le film de résine thermoplastique est formé d'une composition qui contient de plus 0,02 à 5 parties en poids d'au moins un composé amine encombré par rapport à 100 parties en poids de la résine thermoplastique.

**15.** Film agricole selon l'une quelconque des revendications 9 à 14, dans lequel le film de résine thermoplastique est formé de la composition qui contient de plus 0,01 à 5 parties en poids d'un absorbant ultraviolet par rapport à 100 parties en poids de la résine thermoplastique.

**16.** Utilisation de la composition antibuée selon l'une quelconque des revendications 1 à 5 dans une serre ou film agricole.